# EUROPEAN PATENT SPECIFICATION

(11) **EP 0 583 335 B1**
(45) Date of publication and mention of the grant of the patent: **03.01.1996**
(21) Application number: 92910059.2
(22) Date of filing: 08.05.1992
(51) Int. Cl.: F16D 41/04

(54) **A MAGNETIC APPARATUS FOR PREVENTING BACKLASH OF TRANSMISSION FOR A VEHICLE**
MAGNETISCHE VORRICHTUNG ZUR VERHINDERUNG VON SPIEL IM GETRIEBE EINES FAHRZEUGES
APPAREIL MAGNETIQUE SERVANT A EMPECHER LE JEU DANS LA TRANSMISSION D'UN VEHICULE

(30) Priority: 08.05.1991 KR 741891
(43) Date of publication of application: 23.02.1994
(73) Proprietor: HA, Jung Yong, Kwanak-gu, Seoul 151-057 (KR)
(72) Inventor: HA, Jung Yong, Kwanak-gu, Seoul 151-057 (KR)
(74) Representative: Wood, Anthony Charles
(86) International application number: PCT/KR92/00013
(87) International publication number: WO 92/19884

(56) References cited:
- AT-B- 298 902
- CH-A- 591 644
- DE-A- 2 164 097
- DE-A- 2 251 629
- DE-A- 2 604 567
- US-A- 3 994 377
- US-A- 4 770 054

## Description

The present invention relates to an apparatus for preventing backlash of a transmission for a vehicle, and in particular to a magnetic apparatus for preventing backlash of a transmission in which a gear is mounted on a driving shaft that can smoothly mesh with another gear mounted on a passive shaft. The apparatus of the present invention can be used in a super-high speed rotating apparatus with little noise.

In the past, backlash-preventing bearings for vehicle transmissions, such as a roller clutch or over running clutch, were used to permit rotation of the transmission in only one direction. Rotation of the transmission in the opposite direction is thereby prevented.

Therefore, in a gear assembly of which the driving shaft gear is fixed to mesh with the passive shaft gear, the bearings can properly prevent backlash of the vehicle transmission. However, when the passive shaft is not rotated, in the case in which the passive shaft gear must be meshed with the driving shaft gear, the probability that the driving gear will mesh properly with the passive gear to be rotated as compared with the probability that it will not mesh properly with the passive gear to be rotated is approximately even.

That is, in the case in which the passive gear being meshed with the driving gear is stationary, the teeth of the passive gear and the teeth of the driving gear do not always mesh exactly with each other. Sometimes each gear is met with free ends of the teeth so that power cannot be transmitted from the driving gear to the passive gear.

The above problem occurs because there is no relative clearance for moving between the driving gear and the passive gear. Whether the teeth of the gears exactly mesh or not depends on the conditions of the mating of the teeth.

Therefore, in the backlash-preventing apparatus of the prior art constructed as above, it is difficult for the teeth of gears to mesh exactly with each other in the condition in which the passive gear is stopped. Moreover, in the case in which there is high speed rotation of the driving gear, severe friction between the backlash-preventing gears and driving gear generates serious noise. Accordingly, such apparatus cannot be used for a super high speed rotating apparatus.

In United States Patent No. 4,770,054, a backlash preventing apparatus is disclosed in which limited reverse rotation is permitted to facilitate meshing of the gears in a vehicle transmission. Meshing is achievable even when the gear assembly mounted on the passive shaft is stationary. This known backlash preventing apparatus comprises an outer race fixed to a body or passive shaft and an inner race fixed to a driving shaft with a roller clutch mounted between the two. The roller clutch is provided with a plurality of inclined grooves around its outer periphery and a backlash-preventing roller is positioned in each of these grooves. When the apparatus is rotated in a forward direction, the backlash-preventing rollers slip and roll along the inner surface of the outer race against the restoring force of respective support springs and pins. On the other hand, when the apparatus is rotated in a reverse direction, the support springs and pins urge the backlash-preventing rollers up the inclined surfaces of their respective grooves. The frictional and rotational forces acting on the outer race, the backlash-preventing rollers and the roller clutch operate so as to bind these components together after just a few degrees of reverse rotation.

One of the drawbacks of this known apparatus is its mechanical complexity which makes assembly difficult and compromises long-term reliability.

It is therefore an object of the present invention to provide a magnetic backlash-preventing apparatus for a transmission, which prevents surely the backlash of the transmission and which can be adapted to various power transmission apparatus, i.e., transmission motorcycles, automobiles, ships, etc.

Another object of the present invention is to provide a magnetic backlash-preventing apparatus for a transmission having a gear assembly mounted on the driving shaft and a passive shaft which can be effectively meshed under any conditions.

It is yet another object of the present invention to provide a magnetic backlash-preventing apparatus which is suitable for use with a super high speed rotating assembly due to its low noise generating characteristics.

With the above objects in view, a magnetic backlash-preventing apparatus for a vehicle transmission in accordance with the present invention comprises an outer race fixed to a passive shaft or body, an inner race fixed to a driving shaft and a plurality of projections provided on the outer circumferential surface of said inner race or the inner circumferential surface of said outer race and is characterised in that said apparatus further comprises:
a plurality of rotating bodies corresponding in number to the number of said projections disposed between said outer race and said inner race, each of said rotating bodies having an abutment surface adapted for engagement with a respective one of said projections;
a permanent magnet mounted on each of said rotating bodies;
an annular plate on which said rotating bodies are supported by magnetic attraction, and
a backlash-preventing roller disposed between each of said rotating bodies;
the arrangement being such that relative angular displacement is possible between the projections and the abutment surfaces of the rotating bodies up to a maximum angle α, by means of which forward rotation of the inner race results in a first condition in which there is engagement between the projections and respective abutment surfaces of the rotating bodies, with the backlash-preventing rollers being located at positions distant from said projections, whereas reverse rotation of the inner race results in a second condition in which there is engagement between the projections and respective backlash-preventing rollers causing radially outward movement of the backlash-preventing rollers, with the abutment surfaces of the rotating bodies being separated by an angle α from said projections, the second condition being that in which relative rotation between the inner race and the outer race is prevented.

When the driving shaft rotates in a forward direction, said rotating bodies and said backlash-preventing rollers disposed between the outer race and the inner race rotate in the same direction by means of said projections. But when said driving shaft is rotated in a reverse direction by means of a negative load, said backlash-preventing rollers are pushed to a position in which the space between the outer race and the inner race is narrow. Therefore, said backlash-preventing rollers function as a key between the outer race and the inner race. Thus, said inner race cannot rotate backwards so that the backlash of the transmission can be finally prevented.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those who are skilled in the art from this detailed description.

The present invention will become more fully understood from the detailed description given hereinbelow and the accompanying drawings which are given by way of illustration only, and thus are not limitative of the present invention, and wherein:
Figure 1(a) is a cross sectional view of a preferred embodiment of the present invention mounted between an outer race and an inner race of the transmission;
Figure 1(b) is a cross sectional view of a preferred embodiment of the present invention after a little reverse rotation of the transmission;
Figure 2(a) is a view similar to Fig. 1(a) of an alternate embodiment of the present invention;
Figure 2(b) is a view of Fig. 2(a) after a little reverse rotation of the transmission.

### DETAILED DESCRIPTION OF THE PREFERRED EMBODIMENTS

Referring now to Fig. l(a), this shows a magnetic backlash-preventing apparatus in accordance with a preferred embodiment of the present invention mounted between an outer race 2 and an inner race 5. There is also shown a body 1 of a transmission on which the outer race 2 is mounted and a driving shaft 3 to which the inner race 5 having a plurality of projections 4 is fixed. In this embodiment, said projections 4 have a triangular cross-section and are placed around the outer circumferential surface of the inner race 5.

A permanent magnet 6 is mounted on each of a plurality of rotating bodies 7 having an L-shaped cross-section, said rotating bodies 7 being accommodated between the outer race 2 and inner race 5. The number of rotating bodies 7 corresponds to the number of said projections 4. An annular plate 8 is provided for supporting said rotating bodies 7 by magnetic attraction. A backlash-preventing roller 9 is disposed between adjacent rotating bodies 7.

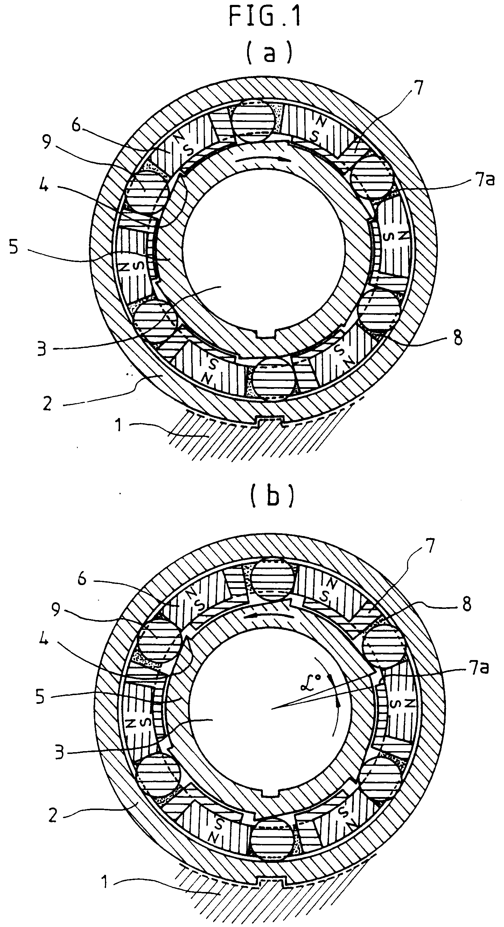

Thus, if the driving shaft 3 rotates clockwise as shown by the arrow in Fig. 1(a), all components displaced between the driving shaft 3 and the body 1 of the transmission smoothly rotate in the clockwise direction. That is, as the driving shaft 3 rotates in the clockwise direction, the inner race 5 fixed to the driving shaft 3 rotates in the same direction and, as the abutment surface 7a of the rotating body 7 having an L-shaped cross-section is contacted with the projection 4 formed on the outer circumferential surface of the inner race 5, said rotating body 7 rotates with the inner race 5. Also, the annular plate 8 supporting the rotating body 7 and the backlash-preventing roller 9 rotate by virtue of their engagement with the rotating bodies 7. Therefore, all components between the driving shaft 3 and the outer race 2 rotate in the same direction as the driving shaft 3.

Referring to Fig. 1(b), this shows the condition of reverse rotation compared to Fig. 1(a). Fig. 1(b) shows the stop state of the driving shaft 3 after a little backlash of the driving shaft 3. At the stop state of the driving shaft 3, when a first gear (not shown) mounted on the driving shaft 3 meshes with a second gear (not shown) mounted on the passive shaft or body 1, the second gear can easily mesh with the first gear on the driving shaft 3. The detailed description of the above state is that the first gear mounted on the driving shaft is released from the second gear on the passive shaft by reason of speed change, and after the operation of the speed change is completed, the first gear again meshes with the second gear. The moment that free ends of the teeth of the first gear meet with those of the second gear, as shown in Fig. 1(b), the driving shaft 3 rotates in the reverse direction about α degrees and provides a gap around the first gear to allow backward rotation thereof.

The backward rotation of the first gear can allow the first gear on the driving shaft 3 to mesh exactly with the second gear. The backward movement of the first gear is caused by the reaction between the teeth of gears. Therefore, even in the non-rotating state of the second gear, the first gear on the driving gear connected to the transmission gear box can easily mesh with the second gear.

In addition, when the driving shaft 3 is backlashed by a load of inverse direction, for example when the annular plate 8 is backlashed, i.e. rotates counter-clockwise, at the stop state of the annular plate 8 and the plurality of rotating bodies 7 affixed thereto by means of magnetic force of the permanent magnet 6, the inner race 5 is backlashed to about α degree as shown in Fig. 1(b). This is because, at the same time, the backlash preventing rollers 9 are pushed to a point of narrow width between the inner race 5 and the outer race 2 by virtue of the projections 4. Therefore, said backlash preventing rollers 9 function as keys between the outer race 2 and the inner race 5. Thus said driving shaft 3 cannot rotate backwards so that the backlash of transmission can be finally prevented.

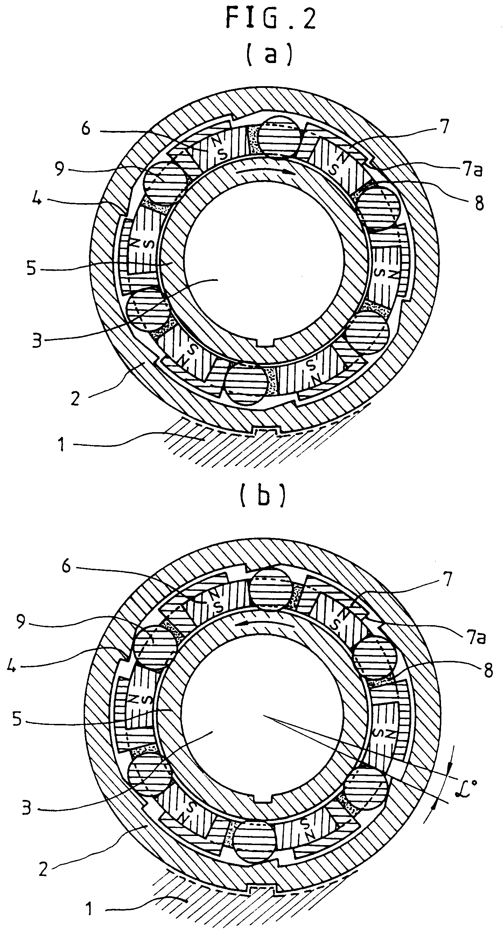

Fig. 2(a) and 2(b) show a magnetic backlash-preventing apparatus in accordance with another embodiment. The difference between this embodiment and the first embodiment is that said projections 4 are formed along the inner circumferential surface of the outer race 2. Therefore, the driving shaft 3 rotates clockwise, at the same time, said inner race 5 rotates in the same direction. However, the rotating body 7, annular plate 8 and backlash-preventing rollers 9 placed between the outer race 2 and inner race 5 do not rotate because such clockwise rotation is prevented by means of the projection 4. This is not the same as the first embodiment.

When said driving shaft 3 rotates counter-clockwise as shown in Fig. 2(b), the backlash-preventing rollers 9 are pushed to a point of narrow width between the outer race 2 and the inner race 5. Thus said driving shaft 3 cannot rotate backwards so that the backlash of transmission can be effectively prevented.

Accordingly, the magnetic backlash-preventing apparatus in accordance with the present invention prevents further backlash after α degrees, thereby resulting in no overload on the whole apparatus and effectively preventing reverse rotation in case of a sudden negative load. Further, the magnetic backlash-preventing apparatus in accordance with the present invention may be applied in various transmission, i.e. transmission of auto-bycycles, vehicles, ships, etc. In addition, in case of free rotation, the driving shaft 3 rotates in high speed, if any, generating very small friction, so that little noise and heat of friction is generated. The value of α degrees can be changed if necessary.

## Claims

1. A backlash-preventing apparatus for a vehicle transmission, said apparatus comprising an outer race (2) fixed to a passive shaft or body (1), an inner race (5) fixed to a driving shaft (3) and a plurality of projections (4) provided on the outer circumferential surface of said inner race (5) or the inner circumferential surface of said outer race (2);
characterised in that said apparatus further comprises:
a plurality of rotating bodies (7) corresponding in number to the number of said projections (4) disposed between said outer race (2) and said inner race (5), each of said rotating bodies (7) having an abutment surface (7a) adapted for engagement with a respective one of said projections (4);
a permanent magnet (6) mounted on each of said rotating bodies (7);
an annular plate (8) on which said rotating bodies (7) are supported by magnetic attraction, and
a backlash-preventing roller (9) disposed between each of said rotating bodies (7);
the arrangement being such that relative angular displacement is possible between the projections 4 and the abutment surfaces 7a of the rotating bodies 7 up to a maximum angle α, by means of which forward rotation of the inner race (5) results in a first condition in which there is engagement between the projections (4) and respective abutment surfaces (7a) of the rotating bodies (7), with the backlash-preventing rollers (9) being located at positions distant from said projections (4), whereas reverse rotation of the inner race (5) results in a second condition in which there is engagement between the projections (4) and respective backlash-preventing rollers (9) causing radially outward movement of the backlash-preventing rollers (9), with the abutment surfaces (7a) of the rotating bodies (7) being separated by an angle *α* from said projections (4), the second condition being that in which relative rotation between the inner race (5) and the outer race (2) is prevented.

## Patentansprüche

1. Vorrichtung zur Verhinderung eines Spiels bei einem Fahrzeuggetriebe, wobei die Vorrichtung eine an einer passiven Welle oder einem Körper (1) befestigte Außenspur (2), eine an einer Antriebswelle (3) befestigte Innenspur (5) und eine Vielzahl von Vorsprüngen (4) aufweist, die an der äußeren Umfangsfläche der Innenspur (5) oder an der inneren Umfangsfläche der Außenspur (2) vorgesehen sind;
dadurch gekennzeichnet, daß die Vorrichtung weiterhin besteht aus:
einer Vielzahl von Rotationskörpern (7) einer der Anzahl der Vorsprünge (4) entsprechenden Anzahl, die zwischen der Außenspur (2) und der Innenspur (5) angeordnet sind, wobei jeder der Rotationskörper (7) eine Anschlagfläche (7a) aufweist, die für einen Eingriff mit einem betreffenden der Vorsprünge (4) angepaßt ist;
einem Dauermagneten (6), der an jedem der Rotationskörper (7) befestigt ist;
einer ringförmigen Platte (8), an welcher die Rotationskörper (7) durch magnetische Anzugskraft abgestützt sind, und
einer zwischen jedem der Rotationskörper (7) angeordnete Rolle (9) zur Verhinderung eines Spiels;
wobei die Anordnung derart ist, daß eine relative Winkelverschiebung zwischen den Vorsprüngen (4) und den Anschlagflächen (7a) der Rotationskörper (7) möglich ist bis zu einem maximalen Winkel (α), mittels welchem eine Vorwärtsdrehung der Innenspur (5) in einem ersten Zustand resultiert, in welchem ein Eingriff zwischen den Vorsprüngen (4) und den betreffenden Anschlagflächen (7a) der Rotationskörper (7) vorliegt, wobei die ein Spiel verhindernden Rollen (9) in Positionen fern von den Vorsprüngen (4) angeordnet sind, während eine Rückwärtsdrehung der Innenspur (5) in einem zweiten Zustand resultiert, in welchem ein Eingriff zwischen den Vorsprüngen (4) und den ein Spiel verhindernden betreffenden Rollen (9) vorliegt, wodurch eine radiale Auswärtsbewegung der ein Spiel verhindernden Rollen (9) bewirkt wird, wobei die Anschlagflächen (7a) der Rotationskörper (7) um einen Winkel (α) von den Vorsprüngen (4) getrennt sind, wobei der zweite Zustand derjenige ist, in welcher eine relative Drehung zwischen der Innenspur (5) und der Außenspur (2) verhindert wird.

## Revendications

1. Appareil de blocage de jeu pour une transmission de véhicule, ledit appareil comportant un tambour extérieur(2) fixé à un arbre passif ou un corps (1), un chemin de roulement intérieur (5) fixé à un arbre menant (3) et une pluralité de saillies (4) formées sur la surface circonférentielle extérieure dudit chemin de roulement intérieur (5) ou sur la surface circonférentielle intérieure dudit tambour (2) ;
caractérisé en ce que ledit appareil comporte en outre :
une pluralité de corps rotatifs (7) dont le nombre correspond au nombre desdites saillies (4) disposées entre ledit tambour (2) et ledit chemin de roulement intérieur (5), chacun desdits corps rotatifs (7) comportant une surface de butée (7a) adaptée pour s'engager respectivement contre une desdites saillies (4) ;
un aimant permanent (6) monté sur chacun desdits corps rotatifs (7) ;
une plaque annulaire (8) qui supporte par attraction magnétique lesdits corps rotatifs (7) et un rouleau (9) de blocage de jeu disposé entre chacun desdits corps rotatifs (7) ;
l'agencement étant tel qu'il rend possible le déplacement angulaire relatif des saillies (4) par rapport aux surfaces de butée (7a) des corps rotatifs (7) jusqu'à un angle maximum α, permettant une rotation dans le sens de l'entraînement du chemin de roulement intérieur (5) ce qui établit une première condition dans laquelle les saillies (4) sont en engagement avec les surfaces de butée respectives (7a) des corps rotatifs (7), les rouleaux (9) de blocage de jeu étant situés dans des positions éloignées desdites saillies (4), alors que la rotation en sens inverse du chemin de roulement intérieur (5) établit une deuxième condition dans laquelle les saillies (4) sont en engagement avec les rouleaux (9) de blocage de jeu respectifs, entraînant un déplacement radial orienté vers l'extérieur des rouleaux (9) de blocage de jeu, les surfaces de butée (7a) des corps rotatifs (7) étant séparées d'un angle α desdites saillies (4), la deuxième condition étant celle qui empêche la rotation relative du chemin de roulement intérieur (5) par rapport au tambour (2).
